# EUROPEAN PATENT APPLICATION

(11) **EP 2 846 595 A1**
(43) Date of publication of application: **11.03.2015**
(21) Application number: 13796545.5
(22) Date of filing: 20.05.2013
(51) Int. Cl.: H04W 72/12, H04W 92/12, H04L 12/70

(54) **DOWNLINK DATA BLOCK PROCESSING METHOD, DEVICE AND SYSTEM**

(30) Priority: 31.05.2012 CN 201210176678
(71) Applicant: Huawei Technologies Co., Ltd, Shenzhen, Guangdong 518129 (CN)
(72) Inventor: HUANG, Xiaoming, Shenzhen Guangdong 518129 (CN)
(74) Representative: Körber, Martin Hans
(86) International application number: PCT/CN2013/075919
(87) International publication number: WO 2013/178025

(57) **Abstract**

The present invention provides a downlink data block processing method, device, and system. The method includes: determining, by a base station controller (BSC), that no data needs to be sent to a mobile station on a packet data channel (PDCH) of a base station (BTS); and sending, by the BSC, an indication message to indicate the BTS to stop sending a downlink data block on the PDCH. The present invention can solve a problem in the prior art that because the data amount of a PS service is small, most of downlink data blocks transmitted by the BTS are invalid downlink data blocks (that is, data blocks that do not include data sent by a core network to a mobile station). When no PS service data needs to be sent to a mobile station, the BTS does not send an invalid downlink data block, so that interference is not caused to other signals on an air interface, thereby enhancing performance of the air interface, and effectively improving the quality of a PS service and a CS service. Meanwhile, by using the technical solutions provided in the embodiments, power consumption of the BTS can be effectively reduced.

## Description

This application claims priority to Chinese Patent Application No. 201210176678.6, filed with the Chinese Patent Office on May 31, 2012 and entitled "DOWNLINK DATA BLOCK PROCESSING METHOD, DEVICE, AND SYSTEM", which is incorporated herein by reference in its entirety.

### TECHNICAL FIELD

The present invention relates to communications technologies, and in particular, to a downlink data block processing method, device, and system.

### BACKGROUND

In a general packet radio service (General Packet Radio Service, GPRS for short) network, a physical channel used by a packet switched (Packet Switching, PS for short) service is called a packet data channel (Packet Data CHannel, PDCH for short). A base station (Base Transceiver Station, BTS for short) transmits downlink data blocks on the PDCH at full power.

However, because the data amount of the PS service is small, most of the downlink data blocks transmitted by the BTS are invalid downlink data blocks (that is, data blocks that do not include data sent by a core network to a mobile station), thereby causing interference to other signals on an air interface, and lowering performance of the air interface.

### SUMMARY

The present invention provides a downlink data block processing method, device, and system, so as to improve performance of an air interface.

According to one aspect, a downlink data block processing method is provided, including:
determining, by a base station controller (Base Station Controller, BSC for short), that no data needs to be sent to a mobile station on a packet data channel (PDCH) of a base station (BTS); and
sending, by the BSC, an indication message to indicate the BTS to stop sending a downlink data block on the PDCH.

According to one aspect, a downlink data block processing method is provided, including:
receiving, by a base station (BTS), an indication message sent by a base station controller (BSC), where the indication message is sent to the BTS after the BSC determines that no data needs to be sent to a mobile station on a packet data channel (PDCH) of the BTS; and
stopping, by the BTS according to the indication message, sending a downlink data block on the PDCH.

According to another aspect, a base station controller is provided, including:
a determining unit, configured to determine that no data needs to be sent to a mobile station on a packet data channel (PDCH) of a base station (BTS); and
a sending unit, configured to, after the determining unit determines that no data needs to be sent to the mobile station on the PDCH of the BTS, send an indication message to indicate the BTS to stop sending a downlink data block on the PDCH.

According to another aspect, a base station is provided, including:
a receiving unit, configured to receive an indication message sent by a base station controller (BSC), where the indication message is sent to the BTS after the BSC determines that no data needs to be sent to a mobile station on a packet data channel (PDCH) of the BTS; and
a processing unit, configured to stop, according to the indication message received by the receiving unit, sending a downlink data block on the PDCH.

According to another aspect, a downlink data block sending system is provided, including the base station controller and the base station that are described above.

It can be known from the foregoing technical solutions that, in the embodiments of the present invention, a base station controller determines that no data needs to be sent to a mobile station on a PDCH of a base station, and indicates the base station to stop sending a downlink data block on the PDCH, which can solve a problem in the prior art that because the data amount of a PS service is small, most of downlink data blocks transmitted by the base station are invalid downlink data blocks (that is, downlink data blocks that do not include data sent by a core network to a mobile station). When no PS service data needs to be sent to a mobile station, the base station does not send an invalid downlink data block, which reduces interference, thereby enhancing performance of an air interface, and effectively improving the quality of a PS service and a circuit switched (Circuit Switching, CS for short) service. Meanwhile, by using the technical solutions provided in the embodiments, power consumption of a base station can be effectively reduced.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic flowchart of a downlink data block processing method according to an embodiment of the present invention;
FIG. 2 is a schematic flowchart of another downlink data block processing method according to an embodiment of the present invention;
FIG. 3 is a schematic structural diagram of a base station controller according to an embodiment of the present invention; and
FIG. 4 is a schematic structural diagram of a base station according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

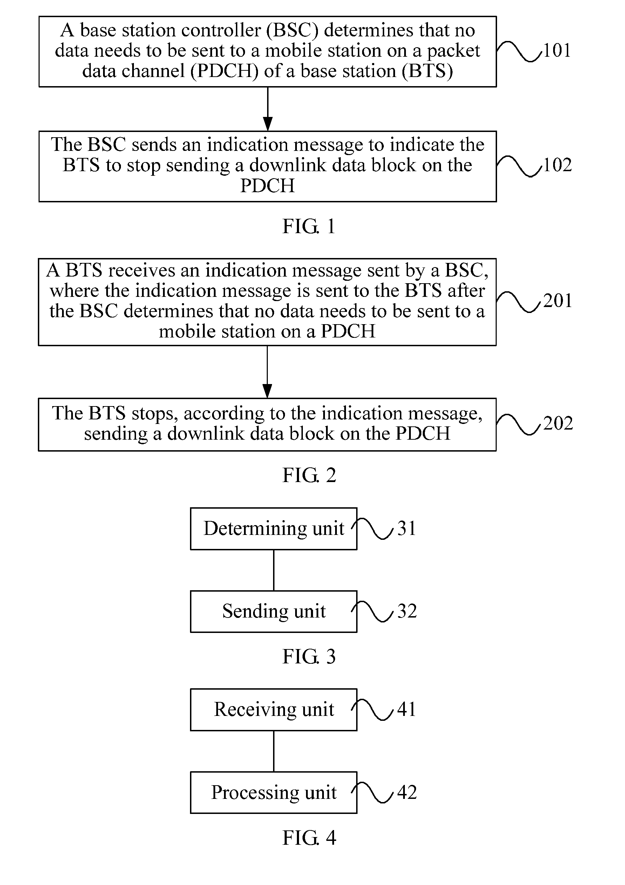

FIG. 1 is a schematic flowchart of a downlink data block processing method according to an embodiment of the present invention. As shown in FIG. 1, the downlink data block processing method in this embodiment may include:
101: A base station controller (BSC) determines that no data needs to be sent to a mobile station on a packet data channel (PDCH) of a base station (BTS).

In an optional implementation manner of the embodiment of the present invention, if no mobile station accesses the PDCH, that is, when the PDCH is in an idle state, the BSC determines that no data needs to be sent to the mobile station on the PDCH.

In another optional implementation manner of the embodiment of the present invention, if at least one mobile station accesses the PDCH of the BTS, that is, when the PDCH is in a non-idle state and the BSC does not receive data of the at least one mobile station from a core network, the BSC determines that no data needs to be sent to the mobile station on the PDCH of the BTS.

102: The BSC sends an indication message to indicate the BTS to stop sending a downlink data block on the PDCH.

Optionally, in an optional implementation manner of this embodiment, in 102, the BSC may use an existing message, for example, a transcoder and rate adapter unit (Transcode Rate Adapter Unit, TRAU for short) frame, to carry a piece of indication information, so as to indicate the BTS to stop sending the downlink data block on the PDCH.

Optionally, in an optional implementation manner of this embodiment, in 102, the BSC may use a newly added message to carry a piece of indication information, so as to indicate the BTS to stop sending the downlink data block on the PDCH.

Specifically, in 102, the BSC may indicate the BTS to disable a transmitter on the PDCH (that is, disable a transmitter, of the BTS, for sending the downlink data block on the PDCH), so that the BTS stops sending the downlink data block on the PDCH.

In this embodiment, a BSC determines that no data needs to be sent to a mobile station on a PDCH of a BTS, and sends an indication message to indicate the BTS to stop sending a downlink data block on the PDCH, which can solve a problem in the prior art that because the data amount of a PS service is small, most of downlink data blocks transmitted by the BTS are invalid downlink data blocks (that is, data blocks that do not include data sent by a core network to a mobile station). When no PS service data needs to be sent to a mobile station, the BTS does not send an invalid downlink data block, so that interference is not caused to other signals on an air interface, thereby enhancing performance of the air interface, and effectively improving the quality of a PS service and a CS service. Meanwhile, by using the technical solution provided in this embodiment, it can effectively avoid wasting an air interface resource and increasing power consumption of the BTS.

FIG. 2 is a schematic flowchart of another downlink data block processing method according to an embodiment of the present invention. As shown in FIG. 2, the downlink data block processing method in this embodiment may include:
201: A BTS receives an indication message sent by a BSC, where the indication message is sent to the BTS after the BSC determines that no data needs to be sent to a mobile station on a PDCH of the BTS.

The indication message may be an existing message, for example, a transcoder and rate adapter unit (Transcode Rate Adapter Unit, TRAU for short) frame, or may be a newly added message. The indication message carries a piece of indication information, so as to indicate the BTS to stop sending a downlink data block on the PDCH.

In an optional implementation manner of the embodiment of the present invention, if no mobile station accesses the PDCH (that is, the PDCH is in an idle state), the BSC determines that no data needs to be sent to the mobile station on the PDCH, and sends the indication message to the BTS.

In another optional implementation manner of the embodiment of the present invention, if at least one mobile station accesses the PDCH (that is, the PDCH is in a non-idle state) and the BSC does not receive data of the at least one mobile station from a core network, the BSC determines that no data needs to be sent to the mobile station on the PDCH, and sends the indication message to the BTS.

202: The BTS stops, according to the indication message, sending a downlink data block on the PDCH.

Specifically, in 202, the BTS may disable a transmitter of the BTS on the PDCH according to the indication message (that is, disable a transmitter, of the BTS, for sending the downlink data block on the PDCH).

In this embodiment, a BTS receives an indication message sent by a BSC, where the indication message is sent to the BTS after the BSC determines that no data needs to be sent to a mobile station on a PDCH of the BTS, so that the BTS can stop, according to the indication message, sending a downlink data block on the PDCH, which can solve a problem in the prior art that because the data amount of a PS service is small, most of downlink data blocks transmitted by the BTS are invalid downlink data blocks (that is, data blocks that do not include data sent by a core network to a mobile station). When no PS service data needs to be sent to a mobile station, the BTS does not send an invalid downlink data block, so that interference is not caused to other signals on an air interface, thereby enhancing performance of the air interface, and effectively improving the quality of a PS service and a CS service. Meanwhile, by using the technical solution provided in this embodiment, power consumption of the BTS can be effectively reduced.

It should be noted that, for brevity, the foregoing method embodiments are described as a series of actions. However, persons skilled in the art should understand that the present invention is not limited to the order of the described actions, because some steps may be performed in another order or simultaneously according to the present invention. It should be further understood by persons skilled in the art that the described embodiments all belong to exemplary embodiments, and the involved actions and modules are not necessarily required by the present invention.

In the foregoing embodiments, the description of each embodiment has its own focus. For a part that is not described in detail in an embodiment, reference may be made to related descriptions in other embodiments.

FIG. 3 is a schematic structural diagram of a BSC according to an embodiment of the present invention. As shown in FIG. 3, the BSC in this embodiment may include a determining unit 31 and a sending unit 32.

The determining unit 31 is configured to determine that no data needs to be sent to a mobile station on a PDCH of a BTS.

The sending unit 32 is configured to, after the determining unit 31 determines that no data needs to be sent to the mobile station on the PDCH of the BTS, send an indication message to indicate the BTS to stop sending a downlink data block on the PDCH.

The indication message may be an existing message, for example, a TRAU frame, or may be a newly added message. The indication message carries a piece of indication information, so as to indicate the BTS to stop sending a downlink data block on the PDCH.

The functions of the BSC in the embodiment corresponding to FIG. 1 may be implemented by the BSC provided in this embodiment.

In an optional implementation manner of the embodiment of the present invention, the determining unit 31 may be specifically configured to, if no mobile station accesses the PDCH of the BTS, determine that no data needs to be sent to the mobile station on the PDCH of the BTS.

In another optional implementation manner of the embodiment of the present invention, the determining unit 31 may further be specifically configured to, if at least one mobile station accesses the PDCH of the BTS and the BSC does not receive data of the at least one mobile station from a core network, determine that no data needs to be sent to the mobile station on the PDCH of the BTS.

In this embodiment, the determining unit of the BSC determines that no data needs to be sent to a mobile station on a PDCH of a BTS, and the sending unit sends an indication message to indicate the BTS to stop sending a downlink data block on the PDCH, which can solve a problem in the prior art that because the data amount of a PS service is small, most of downlink data blocks transmitted by the BTS are invalid downlink data blocks (that is, data blocks that do not include data sent by a core network to a mobile station). When no PS service data needs to be sent to a mobile station, the BTS does not send an invalid downlink data block, so that interference is caused to other signals on an air interface, thereby enhancing performance of the air interface, and effectively improving the quality of a PS service and a CS service. Meanwhile, by using the technical solution provided in this embodiment, power consumption of the BTS can be effectively reduced.

FIG. 4 is a schematic structural diagram of a BTS according to an embodiment of the present invention. As shown in FIG. 4, the BTS in this embodiment may include a receiving unit 41 and a processing unit 42.

The receiving unit 41 is configured to receive an indication message sent by a BSC, where the indication message is sent to the BTS after the BSC determines that no data needs to be sent to a mobile station on a PDCH of the BTS.

The processing unit 42 is configured to stop, according to the indication message received by the receiving unit 41, sending a downlink data block on the PDCH.

The indication message may be an existing message, for example, a TRAU frame, or may be a newly added message. The indication message carries a piece of indication information, so as to indicate the BTS to stop sending a downlink data block on the PDCH.

Specifically, the processing unit 42 in this embodiment may specifically disable a transmitter of the BTS on the PDCH according to the indication message.

In this embodiment, the BTS uses a receiver to receive an indication message sent by a BSC, where the indication message is sent to the BTS after the BSC determines that no data needs to be sent to a mobile station on a PDCH of the BTS, so that a processor can stop, according to the indication message, sending a downlink data block on the PDCH, which can solve a problem in the prior art that because the data amount of a PS service is small, most of downlink data blocks transmitted by the BTS are invalid downlink data blocks (that is, data blocks that do not include data sent by a core network to a mobile station). When no PS service data needs to be sent to a mobile station, the BTS does not send an invalid downlink data block, so that interference is caused to other signals on an air interface, thereby enhancing performance of the air interface, and effectively improving the quality of a PS service and a CS service. Meanwhile, the technical solution provided in this embodiment, power consumption of the BTS can be effectively reduced.

An embodiment of the present invention provides a downlink data block processing system, including the BSC provided in the embodiment corresponding to FIG. 3 and the BTS provided in the embodiment corresponding to FIG. 4.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. Furthermore, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to an actual need to achieve the objectives of the solutions of the embodiments.

In addition, functional units in the embodiments of the present invention may be integrated into one processing unit, or each of the units may exist alone physically, or two or more units are integrated into one unit. The integrated unit may be in a form of hardware, or implemented in a form of hardware and a software functional unit.

The integrated unit implemented in the form of a software functional unit may be stored in a computer readable storage medium. The software functional unit is stored in a storage medium, and includes several instructions for indicating a computer device (which may be a personal computer, a server, or a network device) to perform all or a part of the steps of the methods described in the embodiments of the present invention. The foregoing storage medium includes any medium that can store program code, such as a USB flash drive, a removable hard disk, a read-only memory (Read-Only Memory, ROM for short), a random access memory (Random Access Memory, RAM for short), a magnetic disk, or an optical disc.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof; however, these modifications or replacements do not cause the essence of corresponding technical solutions to depart from the spirit and scope of the technical solutions in the embodiments of the present invention.

## Claims

1. A downlink data block processing method, comprising:
determining, by a base station controller, BSC, that no data needs to be sent to a mobile station on a packet data channel, PDCH of a base station, BTS; and
sending, by the BSC, an indication message to indicate the BTS to stop sending a downlink data block on the PDCH.

2. The method according to claim 1, wherein the determining, by a base station controller, BSC, that no data needs to be sent to a mobile station on a packet data channel, PDCH, of a base station, BTS, comprises:
if no mobile station accesses the PDCH, determining, by the BSC, that no data needs to be sent to the mobile station on the PDCH; or
if at least one mobile station accesses the PDCH and the BSC does not receive data of the at least one mobile station from a core network, determining, by the BSC, that no data needs to be sent to the mobile station on the PDCH.

3. A downlink data block processing method, comprising:
receiving, by a base station, BTS, an indication message sent by a base station controller, BSC, wherein the indication message is sent to the BTS after the BSC determines that no data needs to be sent to a mobile station on a packet data channel, PDCH, of the BTS; and
stopping, by the BTS, according to the indication message, sending a downlink data block on the PDCH.

4. The method according to claim 3, wherein the stopping, by the BTS, according to the indication message, sending a downlink data block on the PDCH comprises:
disabling, by the BTS, a transmitter of the BTS on the PDCH according to the indication message.

5. A base station controller, comprising:
a determining unit, configured to determine that no data needs to be sent to a mobile station on a packet data channel, PDCH, of a base station, BTS; and
a sending unit, configured to, after the determining unit determines that no data needs to be sent to the mobile station on the PDCH of the BTS, send an indication message to indicate the BTS to stop sending a downlink data block on the PDCH.

6. The base station controller according to claim 5, wherein the determining unit is specifically configured to:
if no mobile station accesses the PDCH, determine that no data needs to be sent to the mobile station on the PDCH of the BTS; or
if at least one mobile station accesses the PDCH and the base station controller does not receive data of the at least one mobile station from a core network, determine that no data needs to be sent to the mobile station on the PDCH.

7. A base station, comprising:
a receiving unit, configured to receive an indication message sent by a base station controller, BSC, wherein the indication message is sent to the base station after the BSC determines that no data needs to be sent to a mobile station on a packet data channel, PDCH, of the base station; and
a processing unit, configured to stop, according to the indication message received by the receiving unit, sending a downlink data block on the PDCH.

8. The base station according to claim 7, wherein the processing unit is specifically configured to:
disable a transmitter of the base station on the PDCH according to the indication message.

9. A downlink data block processing system, comprising the base station controller according to claim 5 or 6 and the base station according to claim 7 or 8.
